(19) **Europäisches Patentamt**

**European Patent Office**

**Office européen des brevets**

(11) **EP 0 734 519 B1**

(12) **EUROPÄISCHE PATENTSCHRIFT**

(45) Veröffentlichungstag und Bekanntmachung des Hinweises auf die Patenterteilung:
**29.04.1998 Patentblatt 1998/18**

(21) Anmeldenummer: **95903753.2**

(22) Anmeldetag: **15.12.1994**

(51) Int Cl.⁶: **G01N 21/47**

(86) Internationale Anmeldenummer:
**PCT/DE94/01492**

(87) Internationale Veröffentlichungsnummer:
**WO 95/16908 (22.06.1995 Gazette 1995/26)**

(54) **VORRICHTUNG ZUM DURCHLEUCHTEN EINES OBJEKTES**

DEVICE FOR TRANSILLUMINATION

DISPOSITIF DE TRANSILLUMINATION

(84) Benannte Vertragsstaaten:
**BE CH DE FR GB LI LU NL**

(30) Priorität: **15.12.1993 DE 4342526**

(43) Veröffentlichungstag der Anmeldung:
**02.10.1996 Patentblatt 1996/40**

(73) Patentinhaber: **FORSCHUNGSZENTRUM JÜLICH GMBH**
**52425 Jülich (DE)**

(72) Erfinder: **HALLING, Horst**
**D-52459 Pier (DE)**

(56) Entgegenhaltungen:
**EP-A- 0 585 620**

- **IBM TECHNICAL DISCLOSURE BULLETIN, Bd.33, Nr.4, September 1990, NEW YORK US Seiten 387 - 389 'EDGE INSPECTION OF SEMICONDUCTOR SUBSTRATES'**
- **XEROX DISCLOSURE JOURNAL, Bd.9, Nr.1, 1984, STAMFORD, CONN US Seiten 65 - 66 STERLING ET AL. 'RETICLE INSPECTION USING DIFFRACTION PATTERN MASKING'**

EP 0 734 519 B1

**Beschreibung**

Die Erfindung betrifft eine Vorrichtung zum Durchleuchten eines Objektes.

Wird ein diffuser Streuer, z.B. menschliches Gewebe der Hand, mit Licht hoher Intensität durchstrahlt, erscheint es durchscheinend. In nachteiliger Weise jedoch ist die Ortsauflösung sehr gering und nicht geeignet, eine informationsreiche, ortsabhängige, bildliche Wiedergabe des Streuers zu erhalten. In diesem Zusammenhang ist es Ziel der vorliegenden Erfindung, eine Vorrichtung zum Durchleuchten eines Objektes mit, insbesondere sichtbarem Licht mit hoher Ortsauflösung bereitzustellen.

Die Zielsetzung wird mit einer die Merkmale des Anspruchs 1 aufweisenden Vorrichtung erreicht.

Im einzelnen weist die Vorrichtung Mittel auf, mit deren Hilfe paralleles Licht durch eine kodierte Apertur hindurchtritt und anschließend dieses Licht fokussiert wird. Das zu durchleuchtende Objekt ist dabei in der Brennebene des fokussierten Lichtes positioniert. Dabei können Mittel vorgesehen sein, die eine Abtastung innerhalb der Brennebene durch Verschieben des zu durchleuchtenden Objektes (der diffuse Streuer) erlauben. Des weiteren weist die Vorrichtung Mittel zum Kollimieren des durch das Objekt hindurchtretenden Lichtes auf. Schließlich ist ein lichtempfindlicher Detektor vorgesehen, der das so kollimierte Licht auffängt. Das Detektorsignal wird dabei an eine elektronische Bildverarbeitung weitergeleitet. Im Ergebnis kann damit auch bei diffuser Streuung eine hohe Ortsauflösung im Streuer (wie z.B. die menschliche Hand) erfolgen.

Im folgenden wird anhand eines Ausführungsbeispiels und Figuren die Erfindung näher erläutert.

Es zeigen:

Figur 1    schematische Darstellung der einzelnen Komponenten der erfindungsgemäßen Vorrichtung auf dem Lichtweg von der Quelle bis zum Detektor;

Figur 2a    Intensität des Lichtes als Funktion des Ortes am Empfänger für Code ohne Streulicht;

Figur 2b    Intensität des Lichtes als Funktion des Ortes am Empfänger für Code mit Streulicht durch schwache Absorption

Figur 2c    Intensität des Lichtes als Funktion des Ortes am Empfänger für abgeschwächten Code durch stärkere Absorption.

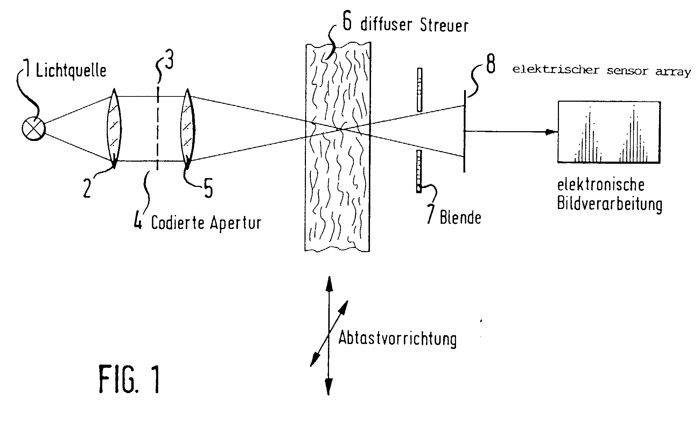

Die in Figur 1 dargestellte Vorrichtung weist eine Lichtquelle 1 auf, die in der Brennebene einer Linse 2 positioniert ist, so daß hinter dieser Linse paralleles Licht aus dieser Linse 2 heraus und durch eine codierte Apertur 4 hindurchtritt und sodann von einer weiteren Linse 5 fokussiert wird. In der Brennebene der Linse 5 ist nunmehr der zu durchleuchtende, diffuse Streuer 6 positioniert. Das durch diesen hindurchtretende Licht trifft nach Hindurchtreten einer Blende 7 zur Kollimierung auf einen Detektor 8, speziell einen Sensorarray 8. Von dort aus wird das so aufgenommene elektrische Signal an eine elektronische Bildverarbeitung 9 weitergeleitet. Die Vorrichtung weist zudem eine nicht im einzelnen dargestellte Abtastvorrichtung auf, die die Verschiebung des diffusen Streuers 6 in der Brennebene der Linse 5 erlaubt, so daß eine sukzessive Abtastung des Objektes mit Hilfe dieser Vorrichtung erreicht wird.

Im einzelnen soll eine Lichtquelle 1 gewählt werden, die eine möglichst hohe Lichtintensität aufweist. Die codierte Apertur 4 enthält ein bestimmtes Muster aufweisende Öffnungen in der Aperturebene. Der elektronische Detektor 8 kann dabei z.B. ein CCD oder ein Diodenarray sein. Verfahrensmäßig wird das zu untersuchende Objekt 6 mit dem durch die Apertur 4 gemusterten Licht in der Brennebene nach und nach abgetastet, wobei die am Detektor 8 so erhaltenen Einzelinformationen elektronisch zu einem Gesamtbild verarbeitet werden. Im folgenden sei im einzelnen die Messung an einem Punkte des Objektes näher erläutert:

Wäre im Strahlengang kein diffuser Streuer, würde das Muster der Apertur als Ergebnis am Detektor erhalten werden. Dabei ist dieses Muster so gewählt, daß ein Gegenmuster in der elektronischen Auswertung existiert, dessen Kreuzkorrelation mit dem Muster ein einziges, ausgeprägtes Maximum besitzt. Es wurde erkannt, daß im Falle der Durchleuchtung eines diffusen Streuers an einer bestimmten Stelle diffuse Streuanteile hinzukommen, so daß das Muster der Apertur mit einem "Schleier" überlagert wird. Das gestreute Licht demgegenüber ist jedoch nicht gemustert, da diese Streuung unkorreliert zum Muster erfolgt.

Soweit die Kreuzkorrelation auf elektronischem Wege durchgeführt wird und sich dabei Muster und gestreutes Licht nicht überlagern, wird der nichtgemusterte Anteil durch die Kreuzkorrelation unterdrückt. Bei der Kreuzkorrelation liefert das unkorrelierte, nichtgemusterte Licht keinen Beitrag zum maximalen Signal. Vielmehr ist der Beitrag des unkorrelierten Lichtes gegenüber dem Beitrag des korrelierten vernachlässigbar klein.

Es wurde die zwei dimensionale Kreuzkorrelationsfunktion

$$\Phi_{xy} = \Sigma_{l,k}\, x[n+l,n+k] * y[l,k]$$

zwischen Maske und empfangenem Bild verwendet.

Bei vorgegebener Dicke des Streuers ist die am Detektor gemessene Höhe des Maximums der Lichtintensität ein Maß für die Lichtabsorption im Streuer.

Es wird dabei von der Voraussetzung ausgegangen, daß im Streuer kleine Bereiche mit erhöhter Lichtabsorption existieren, die gefunden werden sollen. Ein typisches Beispiel könnte in diesem Zusammenhang ein Holzsplitter in der zu durchleuchtenden Hand bilden.

Durch Abtastung des interessierenden Bereiches des Objektes läßt sich dann mit hoher Auflösung die Stelle mit erhöhter Lichtabsorption finden, da dort das Maximum der Kreuzkorrelationsfunktion kleiner ist als an den Nachbarstellen.

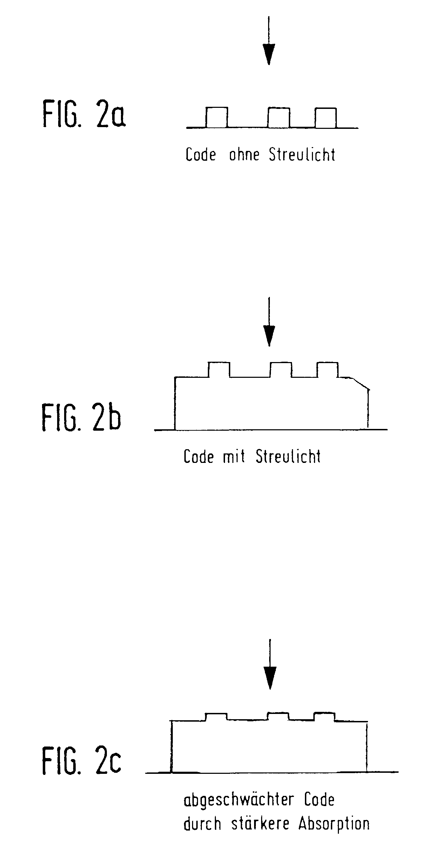

Wie aus Figur 2a hervorgeht, zeigt das vom Detektor aufgefangene Signal eine Codierung, die der Musterung der Apertur entspricht, für den Fall, daß kein Streuer in der Vorrichtung positioniert wurde. In den Figuren 2b und 2c ist für den Fall der Durchleuchtung eines Objektes in der Brennebene der Linse 5 der erfindungsgemäßen Vorrichtung eine modifizierte Musterung (Code), die auch einen Streulichtanteil enthält, der in Abhängigkeit einer mehr oder weniger starken Absorption im diffusen Streuer an der lokalen Stelle mehr (Figur 2c) oder weniger (Figur 2b) geschwächt wird.

Im einzelnen ist es zweckmäßig für den praktischen Einsatz, die Vorrichtung so auszugestalten, daß die Meßzeit pro Abtastpunkt des zu durchleuchtenden Objektes möglichst gering, z.B. unterhalb einer ms, beträgt. In diesem Falle würde eine Abtastfläche von 100 x 100 mm$^2$ innerhalb von etwa 10 s eine bildliche Darstellung des Objektes ermöglichen.

Es ist vorstellbar, zur Durchführung der Streumessungen den Streuer mit Hilfe einer Abtastvorrichtung zu verschieben. Vorstellbar ist jedoch auch, bei festpositioniertem Streuer entsprechend die Apparatur während der Abtastung zu verschieben. Dabei kann eine solche Verschiebung mechanisch, aber auch optisch, ohne mechanische Verschiebung von Lichtquelle, Apertur und Detektor erfolgen.

Im übrigen kann es vorteilhaft sein, als Licht ein solches vorzusehen, das eine bestimmte, möglichst große Wellenlänge aufweist. Es ist dabei vorstellbar, als Lichtquelle eine solche vorzusehen, die im infraroten Bereich arbeitet.

Die codierte Apertur und die Mittel zum Fokussieren des codierten Lichtes können auch dadurch realisiert werden, daß Licht durch eine Anordnung von einer Mehrzahl an Glasfaser, die zueinander so angeordnet sind, daß auf der Lichtaustrittsseite dieses Glasfaserbündels im Ergebnis ein konvergierender Lichtbündel erhalten wird, der aufgrund der gezielt angeordneten Glasfaser eine definierte, erwünschte Musterung aufweist. Auf diese Weise kann die beanspruchte Vorrichtung auf der Lichteintrittsseite des diffusen Streuers in Glasfasertechnologie und damit in vorteilhafter Weise kompakt und in Vergleich zu optischen Linsensystemen frei von den solche Linsensystemen behaftenden Nachteilen ausgebildet sein.

In entsprechender Weise kann auch auf der Lichtaustrittsseite des diffusen Streuer eine solche Glasfaseranordnung zum Einsatz kommen um das durch den Streuer hindurchgetretene Licht mit Hilfe einer in Richtung auf den Streuer zu konvergierenden Anordnung von Glasfasern aufzufangen und an den Detektor, insb. den Sensorarray selektiv weiterzuleiten.

Dabei ist es sehr vorteilhaft, wenn zu jeder einzelnen Glasfaser auf der Lichteintrittsseite des Streuers zum Auffangen und Weiterleiten des Lichtes dieser Glasfaser auf der Lichtaustrittsseite des Streuers eine Glasfaser vorgesehen ist, die an ihrem dem Streuer benachbarten Ende eine räumliche Orientierung aufweist, die bewirkt, daß der nicht am diffusen Streuer gestreute Anteil des aus der Glasfaser auf der Lichteintrittsseite austretenden und durch den zu untersuchenden Bereich des Streuer hindurchtretenden Lichtes sodann auf der Lichtaustrittsseite des Streuers an dem Ende der Glasfaser auf der Lichtaustrittsseite des Streuers in die Glasfaser gelangt und auf diese Weise aufgefangen und weitergeleitet wird.

Die Vorrichtung ist zur Durchleuchtung menschlichen Gewebes beispielsweise im Bereich der Mammographie geeignet und würde in vorteilhafter Weise bisher bekannte Verfahren mit Hilfe von Röntgenstrahldurchleuchtung zu einem gewissen Grad ersetzen. Vorstellbar ist jedoch auch, die Vorrichtung dort einzusetzen, wo nicht menschliches Gewebe durchleuchtet und damit untersucht werden soll.

**Patentansprüche**

1. Vorrichtung zum Durchleuchten eines Objekts mit

   - einer Lichtquelle (1),
   - Mitteln zum zum Erzeugen von parallelem Licht (2),
   - einer codierten Apertur (3), die ein bestimmtes Muster aufweisende Öffnungen in der Aperturebene aufweist,
   - Mitteln zum zum Fokussieren (5) dieses codierten Lichtes auf das zu durchleuchtende Objekt,
   - Mitteln zum Kollimieren (7) des durch das Objekt hindurchgetretenen Lichts,
   - einem dieses Licht auffangenden, lichtempfindlichen Detektor,
   - Mitteln zum zur Durchführung einer Kreuzkorrelation von dem an dem Detektor erhaltenen Muster und einem Gegenmuster.

**Claims**

1. A device for the transillumination of an object, having

   - a light source (1),
   - means for producing parallel light (2),
   - a coded aperture (3) which has openings comprising a defined pattern in the plane of the aperture,
   - means for focusing (5) this coded light on to the object to be transilluminated,
   - means for collimating (7) the light which has passed through the object,
- a light-sensitive detector which intercepts this light,
- means for performing a cross correlation between the pattern received at the detector and a complementary pattern.

**Revendications**

1.  Dispositif de transillumination d'un objet comportant

    - une source de lumière (1),
    - des moyens destinés à produire de la lumière (2) parallèle,
    - une ouverture (3) codée qui comporte dans le plan d'ouverture des ouvertures présentant un dessin déterminé,
    - des moyens de focalisation (5) de cette lumière codée sur l'objet à transilluminer,
    - des moyens de collimation (7) de la lumière qui a traversé l'objet,
    - un détecteur photosensible qui capte cette lumière,
    - des moyens destinés à effectuer une corrélation croisée du dessin obtenu sur le détecteur et d'un dessin conjugué.

FIG. 1

FIG. 2a

Code ohne Streulicht

FIG. 2b

Code mit Streulicht

FIG. 2c

abgeschwächter Code
durch stärkere Absorption